# EUROPÄISCHE PATENTSCHRIFT

(11) **EP 2 233 995 B1**
(45) Veröffentlichungstag und Bekanntmachung des Hinweises auf die Patenterteilung: **17.09.2014**
(21) Anmeldenummer: 10157858.1
(22) Anmeldetag: 25.03.2010
(51) Int. Cl.: G05B 19/042, G05B 19/05

(54) **Selbst überwachende Vorrichtung zur Bestimmung und Überwachung einer Prozessgrösse**
Self-monitoring device for determining and monitoring a process parameter
Dispositif à surveillance automatique destiné à la détermination et à la surveillance d'une grandeur de processus

(30) Priorität: 25.03.2009 DE 102009001824
(43) Veröffentlichungstag der Anmeldung: 29.09.2010
(73) Patentinhaber: Hamilton Bonaduz AG, 7402 Bonaduz (CH)
(72) Erfinder: Arquint, Philipp, CH-7402 Bonaduz/GR (CH); Schönfuss, Dirk, CH-7015 Tamins/GR (CH)
(74) Vertreter: Gulde & Partner

(56) Entgegenhaltungen:
- EP-B1- 1 176 419
- EP-B1- 1 206 012
- EP-B1- 1 643 242
- DE-A1- 10 218 606
- DE-A1-102006 062 184
- US-A1- 2005 289 276

## Beschreibung

Die Erfindung bezieht sich auf eine Vorrichtung zur Bestimmung und Überwachung mindestens einer prozessrelevanten chemischen oder physikalischen Messgrösse, die eine Elektronikeinheit umfassend elektronische Bauelemente zur Energieversorgung, Digitalisierung, Signalübertragung und/oder -speicherung untrennbar mit einem beliebigen Sensor vereint. Die Elektronikeinheit ist derart ausgestaltet, dass sie Mittel aufweist, welche die Funktion und den Zustand sowohl des Sensors als auch eigener Elemente selbständig überprüfen kann. Sie verfügt über Schnittstellen zur sowohl digitalen als auch analogen Kommunikation mit einer übergeordneten Einheit (einem Prozessleitsystem), über eine galvanische Trennung zwischen Messmedium und den Schnittstellen. Die Vorrichtung ist bevorzugt so konstruiert, dass sie bei Temperaturen bis zu 150°C Temperatur stabil und funktionstüchtig eingesetzt werden kann. Die Quelle der Energieversorgung kann mittels einer integrierten Stromversorgungsautomatik automatisch gewählt werden.

### Stand der Technik

In der Prozess- und Automatisierungstechnik werden häufig Messgeräte zur Bestimmung und Überwachung von prozessrelevanten Messgrössen verwendet. Derartige Messgrössen können z.B. der pH-Wert, die Leitfähigkeit oder der Partialdruck eines gelösten Gases sein. Gemessen werden derartige Grössen z.B. mit Hilfe von elektrochemischen, potentiometrischen oder amperometrischen Sensoren, aber auch von optischen Sensoren. Die Sensoren werden in der Regel über Kabel und Steckverbinder an einen so genannten Transmitter angeschlossen, der die analogen Signale der Sensoren erfasst, ggf. umrechnet und in robuste analoge oder digitale Signale wandelt, welche dann analog z.B. über eine 4-20 mA Schnittstelle bzw. digitalisiert mit Hilfe verschiedener Kommunikationsprotokolle über verschiedenste Bussysteme drahtgebunden oder drahtlos zur Verarbeitung an eine übergeordnete Einheit, beispielsweise ein Prozessleitsystem, weitergeleitet werden. Weiterhin kann ein Transmitter ggf. den Sensor kontinuierlich überwachen, seinen Zustand analysieren, die Lebenserwartung eines Sensors einschätzen und ggf. Warn- und Fehlermeldungen generieren und weiterleiten.

In explosionsgefährdeten Bereichen, aber auch um Verfälschungen der Messung durch externe Einflüsse, z.B. durch Erdschleifen oder Leckströme zu vermeiden, werden die medienberührenden Teile der Sensoren galvanisch von der Energieversorgung und von der übergeordneten Einheit getrennt. Dies geschieht in den Transmittern, in jüngster Vergangenheit aber auch in Steckverbindern, die den Sensor über Kabel mit dem Transmitter verbinden.

So beschreibt die Patentschrift EP1206012B1 einen pH- Sensor, der mit einem verbindbaren Stecker- und Buchsenelement lösbar an eine Übertragungsleitung zum Transmitter angeschlossen werden kann. Damit bei den miteinander verbundenen Stecker- und Buchsenelementen eindringende Feuchtigkeit, Staub, Schmutzpartikel und aggressive Substanzen die Signalübertragung nicht beeinträchtigen, weist der Steckverbinder Mittel zur Realisierung einer kontaktlosen, induktiven Signal- und Energieübertragung zwischen dem Stecker- und dem Buchsenelement auf, wobei die dazu notwendigen elektronischen Bauelemente zur Energieversorgung, Digitalisierung und Signalübertragung in den zwei Teilen des lösbaren Steckverbinders integriert sind. Analoge, hochohmige Signale können so unmittelbar vor der Übertragung zum Transmitter digitalisiert und damit in niederohmige Signale umgewandelt werden, so dass Verfälschungen, die bei der Übertragung hochohmiger Signale über Kabel und Kontakte auftreten können, bzw. die Aufwendungen, dies zu verhindern, vermieden werden können. In DE10218606A1 werden ein geeigneter Transmitter sowie ein potentiometrischer Sensor offenbart, wobei fest mit dem Sensor ein digitaler Datenspeicher verbunden ist. In diesem Speicher können neben anderen sensorrelevanten Informationen, wie z.B. die Betriebsstunden, der Kalibrier- und der allgemeine Sensorstatus, auch die Identität des Sensors in Form der Seriennummer oder ähnlichen Identifikationsnummern gespeichert werden, und neben den von der potentiometrischen Messgrösse abhängigen Signalen an den übergeordneten geeigneten Transmitter über eine galvanische oder nicht galvanische Schnittstelle via Kabel übertragen werden.

Derartige Systeme sind unter anderen unter dem Namen "Memosens" von Endress und Hauser Conducta Gesellschaft für Mess- und Regeltechnik mbH + Co. KG erhältlich.

Nachteilig an diesem System ist, dass "Memosens"- Sensoren an die Verwendung eines dafür ausgerüsteten Transmitters gebunden sind, um die Messung an sich vorzunehmen, Kalibrierungen durchzuführen und mit dem Prozessleitsystem zu kommunizieren bzw. die Messdaten an letzteres zu transferieren. D.h. die Transmitter müssen an das Prozessleitsystem und eine Energieversorgung angeschlossen, auf den entsprechenden Sensor parametriert, bedient und gewartet werden. Jeder dieser Schritte kann mit Fehlern und/oder Ausfällen behaftet sein. Es bleibt aufwendig, Fehlbedienungen zu vermeiden und den Anschluss des richtigen Sensors zu gewährleisten. Bekanntermaßen birgt schon eine Mehrzahl von eingesetzten Sensoren in einer Produktionsanlage das Risiko der Verwechslung von Sensoren, besonders bei einem unter Umständen schnell notwendigen Austausch defekter Sensoren oder nach Kalibrierung. Um derartige Verwechslungen zu vermeiden wird in DE102006032905A1 vorgeschlagen, Sensoren z.B. mit Hilfe eines Speicherelementes, das kann ein RFID Chip sein, mit TAG Nummern zu versehen, die eindeutig einem bestimmten Messort und/oder einer bestimmten Messumgebung und/oder einer Messart, mit der der Sensor betrieben werden darf, zugeordnet sind.

Das löst jedoch nicht das Problem, dass bei Betrieb von Prozesssensoren mit herkömmlichen Transmittern aber auch bei dem oben beschriebenen Memosens - System an einen Transmitter nur ein Sensor oder geringe Anzahl von Sensoren gleichzeitig angeschlossen werden können, sowie, dass die Verwendung von Sensoren mit speziellen Ausführungsformen oder Erfordernissen die Anpassung des Steckverbindersystems als auch des Transmitters erfordert.

Dies würde zum Beispiel im Falle von pH- Einstabmessketten auf eine Füllstandsüberwachung des Referenzelektrolytraumes, beschrieben in EP1643242B1, oder einer sekundären Referenzelektrode, wie in EP1176419B1 beschrieben, zutreffen.

Schon die Messung der Diaphragma- Impedanz wird nur von höherwertigen herkömmlichen Transmittern angeboten, ist doch ein zusätzlicher Eingang für den Anschluss eines Solution Ground notwendig. Dabei ist die Verschmutzung des Diaphragmas einer pH- Elektrode einer der häufigsten Gründe für Fehlmessung oder deren Ausfall. Kaum mehr ist es möglich, mit herkömmlichen Transmittern zusätzliche, wie die in oben genannten Schriften beschriebenen Überwachungs- Features, wie den Zustand der Referenzelektrode permanent mit Hilfe einer zweiten Referenzelektrode, oder gar den Füllstand des Referenzelektrolyten zu überwachen, zu realisieren. Diese Aufgabe würde nicht nur höhere Anforderungen an die zu verwendende Technik, sondern auch an das Bedienpersonal stellen, was mit höheren Kosten verbunden wäre. Die Einstellmöglichkeiten des Benutzermenüs des zu verwendenden Transmitters sowie die Diversität der verwendbaren Sensoren würden erweitert werden, was wiederum eine Vermehrung von Fehlerquellen bedeutet. Deswegen konnten sich derartige Sensoren bisher nicht etablieren.

Im Falle von Messgut kontaktierenden Leitfähigkeitssensoren ist bekannt, dass die Signalform der in das Messgut eingebrachten Wechselstrom- oder Wechselspannungssignale im Zusammenhang mit dessen Leitfähigkeit und der Ausführungsform des jeweiligen Sensors, des Transmitters und des Anschlusses des Sensors an diesen Transmitter einen entscheidenden Einfluss auf die Genauigkeit des Messergebnisses insbesondere bei sehr geringen und sehr grossen Leitfähigkeiten hat. Neben Polarisationseffekten an den Elektroden haben auch die Eigenschaften der gewählten Anschlusskabel (z, B. Länge, Schirmung u. ä.) von Sensoren an Transmitter über kapazitive und ohmsche Effekte einen Einfluss auf das Messergebnis. So beschreibt beispielsweise DE19815922A1 ein Verfahren und eine Vorrichtung zur Messung des Leitwertes einer Flüssigkeit. Dabei werden Wechselspannungen verschiedener Frequenzen in den Leitfähigkeitsensor eingespeist, um aus den sich jeweils ergebenden Messergebnissen unter zu Hilfenahme einer vorbestimmten Anzahl von lterationsschritten, den korrekten Leitwert bei der optimalen Frequenz zu ermitteln. Bei herkömmlichen Systemen muss also vorgängig geprüft werden, ob und in welchem Messbereich die erforderliche Genauigkeit mit dem jeweiligen Sensor- Transmitter- System erreicht werden kann.

Wie die oben genannten Beispiele zeigen, ist es unter gewissen Umständen von Varteil, jedem Sensor nur einen und zwar den für ihn optimalen Transmitter zuzuordnen, was mit entsprechenden Kosten verbunden ist. Die Firma Honeywell bietet unter dem Namen DirectLine einfache Transmitter an, welche direkt auf pH- Sensoren montiert werden können und ein 4-20 mA Signal in unmittelbarer Nähe des Sensors generieren. Die Firma AquaSensors bietet unter dem Namen DataStick - Analytical System ein modulares Sensorsystem an, bei dem verschiedene digitale Schnittstellen bzw. Bussysteme über ein universales Sensormodul mit verschiedensten Prozesssensormodulen verbunden werden können. Die Ankopplung eines Prozessleitsystems über die weit verbreitete 4-20 mA Schnittstelle ist hier jedoch nur mit Verwendung eines zusätzlichen trennbaren Moduls möglich. Durch den modularen Aufbau der beiden letztgenannten Systeme ist die Gefahr von unbeabsichtigten Fehlbestückungen durch die Benutzer weiterhin latent.

### Aufgabe der Erfindung

Die Aufgabe der Erfindung ist es, Vorrichtungen bereitzustellen, die die beschriebenen Nachteile des Standes der Technik überwinden und die insbesondere für einen vielfältigen Einsatz unter Verwendung beliebiger spezieller Sensoren geeignet sind, z.B. unter Verwendung von pH- und Leitfähigkeitssensoren zur Bestimmung und Überwachung des pH-Wertes oder der Leitfähigkeit.

Erfindungsgemäß wird eine Vorrichtung zur Bestimmung und Überwachung mindestens einer chemischen oder physikalischen Messgröße angegeben, welche einen Sensor zur Erfassung der chemischen oder physikalischen Messgröße und Generierung von analogen Messdaten und eine mit dem Sensor untrennbar verbundene Elektronikeinheit umfasst. Die Elektronikeinheit umfasst dabei ein Mittel zur Überwachung des Zustandes des Sensors, ein Mittel zur Digitalisierung der analogen Messdaten aus dem Sensor, ein Mittel zur Weiterleitung der analogen und digitalisierten Daten, mindestens eine analoge Schnittstelle und mindestens eine digitale Schnittstelle zur Verbindung der Vorrichtung mit einem Prozessleitsystem sowie eine galvanische Trennung zwischen Messmedium und den Schnittstellen.

Die Elektronikeinheit weist zudem ein Mittel zur selbstständigen Überprüfung sowohl der Funktion und des Zustands der Elektronikeinheit als auch der Funktion und des Zustands des Sensors auf.

Ferner kann die Elektronikeinheit ferner eine Stromversorgungsautomatik umfassen, die derart die Stromversorgung der Vorrichtung steuert , dass bei analoger Kommunikation mit dem Prozessleitsystem die Stromversorgung über die mindestens eine analoge Schnittstelle und bei digitaler Kommunikation mit dem Prozessleitsystem die Stromversorgung der Vorrichtung vermittels eines Mittels zur Verbindung mit einer externen Stromversorgung erfolgt.

Die Elektronikeinheit umfasst bevorzugt ferner ein Mittel zur Datenspeicherung von sensorrelevanten Daten.

Im Mittel zur Datenspeicherung sind und werden bevorzugt Kalibrierdaten und sensorspezifische Daten abgespeichert.

Die Elektronikeinheit kann einen ersten Funktionsblock und einen zweiten Funktionsblock umfassen, wobei der erste Funktionsblock das Mittel zur Digitalisierung der Messdaten, ein Mittel zur Verstärkung der Messdaten sowie ein Mittel zur Aufnahme der Messdaten umfasst, und der zweite Funktionsblock das Mittel zur selbstständigen Überprüfung, ein Mittel zur Verarbeitung des Sensorzustands, das Mittel zur Weiterleitung der Messdaten und das Mittel zur Datenspeicherung der sensorrelevanten Daten umfasst.

Die analoge Schnittstelle ist bevorzugt eine 4-20 mA Schnittstelle. Die digitale Schnittstelle ist bevorzugt eine RS-485 Schnittstelle.

Der Sensor ist in einem Ausführungsbeispiel als Einstabsmesskette ausgebildet ist.

Der Sensor ist in einem weiteren Ausführungsbeispiel ein pH-Sensor und umfasst eine Ableitung für das Potential einer Elektrode, ein Referenzelektrolytraum, ein Diaphragma im Referenzelektrolytraum, einen Temperaturfühler, eine erste Referenzelektrode, eine zweite Referenzelektrode, und ein Solution Ground.

Eine der beiden Referenzelektroden ist bevorzugt gegenüber dem Verlust von Chlorid-lonen im Referenzelektrolyten reaktiver ausgebildet.

In einem anderen Ausführungsbeispiel ist der Sensor ein Leitfähigkeitssensor, wobei der Leitfähigkeitssensor als 4-pol Sensor ausgebildet ist, umfassend zwei Strom- und Spannungselektroden.

Ferner wird ein Verfahren zur Überwachung und Anpassung eines Messgerätes angegeben, welches die Schritte eines Abspeicherns von Sensordaten im Messgerät, eines Auslesens der abgespeicherten Sensordaten, eines Vergleichens der zuletzt abgespeicherten Sensordaten mit zuvor abgespeicherten Sensordaten, und eines Anpassens von Sensorparametern bei Überschreitung einer vordefinierten Abweichung zwischen den abgespeicherten Sensordaten umfasst.

### Kurze Beschreibung der Figuren

Die Erfindung wird im Folgenden anhand einiger Figuren und Ausführungsbeispiele exemplarisch beschrieben werden. Es zeigen
- Figur 1: die schematische Darstellung einer erfindungsgemässen Vorrichtung zur Bestimmung und Überwachung des pH- Wertes,
- Figur 2: zeigt die schematische Darstellung einer erfindungsgemässen Vorrichtung zur Bestimmung und Überwachung der Leitfähigkeit,
- Figur 3: zeigt die schematische Darstellung der Elektronikeinheit eines erfindungsgemässen Messgerätes zum Einsatz mit verschiedenen Sensoren.

### Detaillierte Beschreibung der Figuren

Eine erfindungsgemäße Vorrichtung zur Bestimmung und Überwachung mindestens einer prozessrelevanten chemischen oder physikalischen Messgrösse umfasst eine Elektronikeinheit 3 und einen beliebigen Prozesssensor 22. Erfindungswesentlich ist die feste (untrennbare) Kombination von Elektronikeinheit 3 mit dem Prozesssensor 22. Die Elektronikeinheit 3 ist dabei derart ausgestaltet, dass sie Mittel aufweist, welche Funktion und Zustand sowohl des Sensors als auch der eigenen Elemente selbständig überprüfen können.

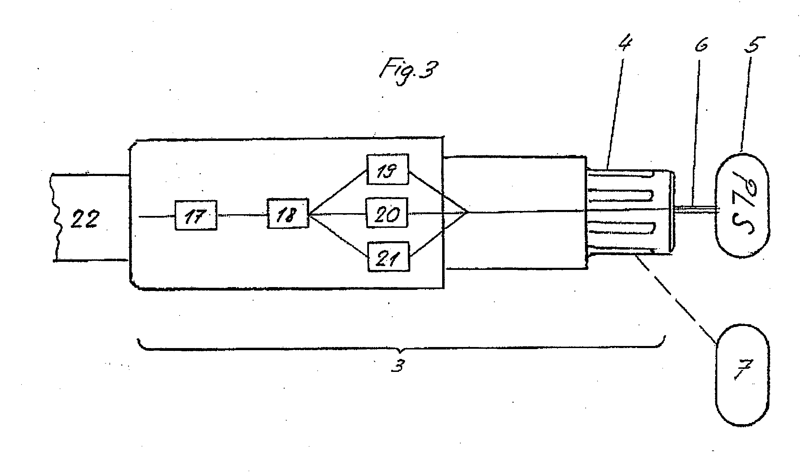

In einer bevorzugten Ausführung weist die Elektronikeinheit 3 zwei Funktionsblöcke 17, 18 auf. Vorteilhafterweise ist ein Funktionsblock 17 z.B. so gestaltet, dass er die Generierung von Signalen, die Aufnahme, Verstärkung und Digitalisierung der Messdaten übernehmen kann. Der weitere Funktionsblock 18 übernimmt dann z.B. die Verarbeitung, Weiterleitung sowie Überwachung des Sensorzustandes und die Speicherung sensorrelevanter Daten. Die Elektronikeinheit 3 verfügt weiterhin über Schnittstellen 19, 20 zur sowohl digitalen als auch analogen Kommunikation mit einem Prozessleitsystem 5, sowie über eine galvanische Trennung zwischen Messmedium und den Schnittstellen. Eine gegebenenfalls integrierte Stromversorgungsautomatik 21 gestattet die Quelle der Energieversorgung automatisch zu wählen. Aufbau und Funktionsweise einer allgemeinen Vorrichtung mit einer bevorzugten Elektronikeinheit 3 sind in Fig. 3 dargestellt.

Die oben beschriebenen Nachteile des Standes der Technik werden durch das erfindungsgemässe Messgerät überwunden, indem die Elektronikeinheit, die die Funktionen des Transmitters übernimmt, untrennbar mit dem individuellen Sensor verbunden ist. Die Elektronikeinheit mit allen Funktionalitäten eines Transmitters verschmilzt somit mit der eigentlichen Sensorkomponente zum erfindungsgemässen Messgerät. D.h. man kann das Messgerät auch als intelligenten Sensor bezeichnen. Das erfindungsgemässe Messgerät erfüllt die dazu erforderlichen Anforderungen hinsichtlich des Platz- und Energiebedarfs als auch hinsichtlich der Temperaturstabilität, da Prozesssensoren u. a. bei SIP und CIP-Prozessen hohen Temperaturen ausgesetzt sind. Das erfindungsgemässe Messgerät ist auch bei Temperaturen bis zu typischerweise 130 - 150°C temperaturstabil und funktionstüchtig, wodurch sein Einsatz auch bei höheren Prozesstemperaturen ermöglicht wird. Die Kosten für einen Transmitter selbst als auch für seine sensorgerechte Konfiguration und Wartung können gespart werden. Da die Konfiguration werksseitig erfolgt, ist das erfindungsgemässe Messgerät sofort und ohne vorherige Konfigurationen einsatzbereit. Gleichzeitig sind die für die Selbst -Überwachung der Sensoren und der Elektronikeinheit erforderlichen Funktionalitäten hard- und softwaremässig implementiert. Verwechslungen beim Anschluss von Sensoren an Transmitter sind nicht mehr möglich. Das Messgerät ist in der Lage dem Prozessleitsystem direkt nicht nur die Art seines Signals, sondern auch dessen Qualität, sowie Fehler und Warnungen zu signalisieren, ohne dass dazu entsprechende Einstellungen an einem externen Transmitter notwendig sind.

Des Weiteren ist es möglich, Sensoren mit individuellen Spezifikationen zu betreiben, da jedem Sensor die auf ihn zugeschnittene Elektronikeinheit mit der entsprechenden Firmware untrennbar zugeordnet ist. Dies ist insbesondere zur Erweiterung der Selbst-Überwachungsfunktionen über das übliche Mass hinaus von Vorteil.

Die niederohmige und damit wenig störungsanfällige Weitergabe von Signalen hochohmiger Sensoren (z.B. ionenselektiver potentiometrischer Sensoren, wie pH- Sensoren), oder von Sensoren, auf deren Messverhalten die Kapazität und der Widerstand von Verbindungskabein einen Einfluss hat, wie z.B. bei kontaktierenden Leitfähigkeitssensoren, wird gewahrt. Das erfindungsgemässe Messgerät kann sowohl digital, beispielsweise über eine serielle RS-485-Schnittstelle als auch analog, beispielsweise über eine 4-20 mA Schnittstelle an das Prozessleitsystem angebunden sein, ohne zusätzliche Mittel dafür zu benötigen. Die entsprechenden Schnittstellen können simultan betrieben werden. Das erfindungsgemässe Messgerät ist damit an moderne, digital kommunizierende Umgebungen angepasst, kann aber auch analog, beispielsweise über die weit verbreitete 4-20 mA Schnittstelle an Prozessleitsysteme angebunden werden. Eine digitale Kommunikation ist nicht zwingend erforderlich.

Über die digitale Kommunikation ist es möglich, bestimmte Konfigurationen und Einstellungen, entsprechend benutzerabhängiger Zugriffsrechte auszulesen und zu verändern.

Vorzugsweise wird die digitale Kommunikation mit der übergeordneten Einheit mit einem standardisierten Protokoll (z.B. Modbus, Profibus o. ä.), welches für alle Sensor-Typen identisch gestaltet ist, realisiert. Dabei werden die sensor- und prozessrelevanten Daten in einer generischen Datenstruktur im Messgerät abgelegt und zur Verfügung gestellt. D.h. die übergeordnete Einheit kann allein mit der Realisierung des Kommunikationsprotokolls und der Datenstruktur ohne weitere Konfiguration alle relevanten Daten, die das erfindungsgemässe Messgerät im Detail beschreiben, z.B. Identität des Messgerätes, Art, Anzahl und Bezeichnung der Messgrössen, zulässige Einheiten, zulässige Messbereiche, zulässige Umgebungsbedingungen, Art, Anzahl und Bezeichnung der Parameter, Art, Anzahl und Bezeichnung der Schnittstellen, Art, Anzahl und Bezeichnung der Kalibriermodi etc. neben den eigentlichen Haupt- und Nebenmessgrössen und Betriebszuständen abrufen. Damit können erfindungsgemässe Messgräte unterschiedlichster Natur an eine übergeordnete Einheit angeschlossen werden, ohne dass die übergeordnete Einheit jemals für diese Messgeräte vorbereitet oder konfiguriert wurde.

In einer Ausführungsform wählt das erfindungsgemässe Messgerät die Quelle der Energieversorgung erfindungsgemäss automatisch, je nach dem ob die Kommunikation mit dem Prozessleitsystem analog oder digital erfolgen soll. Im Falle einer rein analogen Kommunikation über eine 4-20 mA Schnittstelle mit dem Prozessleitsystem erfolgt die Energieversorgung über diese Schnittstelle. Das Messgerät bildet eine Stromsenke (two wire loop powered). Im Fall einer digitalen Kommunikation kann eine externe Stromversorgung erforderlich sein. Ist eine externe Stromversorgung angeschlossen wird automatisch auf diese zurückgegriffen. Dies wird durch eine Stromversorgungsautomatik in der Elektronikeinheit verwirklicht. In einer anderen Ausführungsform der Erfindung mit noch geringerem Energiebedarf erfolgt die Stromversorgung ausschliesslich über die 4-20 mA Schnittstelle.

Optional kann das Messgerät auch schaltbare Ein- bzw. Ausgänge (z.B. digitale I/O) aufweisen, über die beispielsweise Alarmzustände direkt an eine übergeordnete Einheit und/oder direkt an einen Alarmmelder übergeben werden können, eine Regelfunktion realisiert werden kann, oder es können Vorgänge im Messgerät, beispielsweise eine Kalibrierung, ausgelöst werden.

Im Nachhinein wird anhand von Ausführungsbeispielen die erfindungsgemässe Vorrichtung zur Bestimmung und Überwachung einer prozessrelevanten Messgrösse, im folgenden Messgerät genannt, beschrieben, ohne sich auf diese konkreten Anwendungsbeispiele und die angeführten Sensoren zu begrenzen.

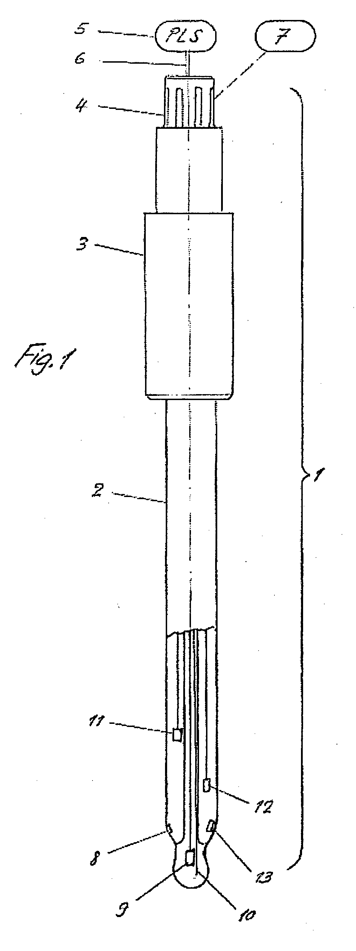

Bevorzugte Ausgestaltungen erfindungsgemäßer Messvorrichtungen sind in den Fig. 1 bis 3 dargestellt:
Figur 1 zeigt die schematische Darstellung einer erfindungsgemässen Vorrichtung zur Bestimmung und Überwachung des pH- Wertes, anhand eines pH- Messgerätes. Das pH-Messgerät 1 vereint eine Elektronikeinheit 3 untrennbar mit einem pH - Sensor 2 als Einstabmesskette ausgeführt, wobei das Messgerät 1 vorzugsweise über einen Stecker 4 mittels eines Kabels 6 mit dem Prozessleitsystem 5 verbunden ist. Es kann aber auch ein Fixkabel zum Anschluss an die übergeordnete Einheit am Messgerät befestigt sein. Bei Bedarf kann das Messgerät an eine externe Stromversorgung 7 angeschlossen werden. Der pH-Sensor ist beispielhaft mit einer Ableitung 10 für das Potential der Glaselektrode, einem Diaphragma 8 im Referenzelektrolytraum, Temperaturfühler 9, einer ersten Referenzelektrode 11, einer zweiten Referenzelektrode 12 sowie mit einem Solution Ground 13 ausgestattet.

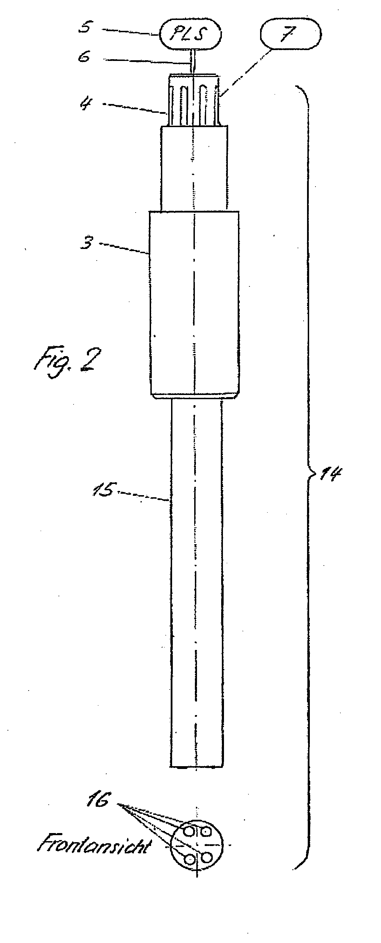

Figur 2 zeigt die schematische Darstellung einer erfindungsgemässen Vorrichtung zur Bestimmung und Überwachung der Leitfähigkeit, anhand eines Leitfähigkeitsmessgerätes. Das Leitfähigkeitsmessgerät 14 vereint eine Elektronikeinheit 3 untrennbar mit einem Leitfähigkeitssensor 15, wobei das Messgerät 14 über einen Stecker 4 über Kabel 6 mit dem Prozessleitsystem 5 verbunden ist. Es kann aber auch ein Fixkabel zum Anschluss an die übergeordnete Einheit am Messgerät befestigt sein. Bei Bedarf kann das Messgerät an eine externe Stromversorgung 7 angeschlossen werden. Der Leitfähigkeitssensor 15 ist als 4-Pol-Sensor ausgelegt und verfügt über 2 Strom- und 2 Spannungselektroden 16.
Figur 3 zeigt die schematische Darstellung der Elektronikeinheit 3 eines erfindungsgemässen Messgerätes, die untrennbar mit einem beliebigen Prozesssensor 22 und über Verbindungskabel 6 lösbar mit dem Prozessleitsystem 5 verbunden ist. Die Elektronikeinheit 3 ist derart ausgestaltet, dass sie Mittel aufweist 17, 18, die die Funktion des Sensors gewährleisten. Dies sind die zum Teil notwendige Generierung von Signalen an den Sensor, Aufnahme und gegebenenfalls Verstärkung der Messdaten des Sensors, weiterhin deren Digitalisierung, Verarbeitung und Weiterleitung sowie die Überwachung des Sensor-Zustandes und Speicherung sensorrelevanter Daten. Diese Funktionen werden arbeitsteilig von den Funktionsblöcken 17 und 18 übernommen. D.h. die Generierung von Signalen, die Aufnahme, Verstärkung und Digitalisierung der Messdaten erfolgt zum Beispiel vom Funktionsblock 17, während die Verarbeitung, die Weiterleitung sowie die Überwachung des Sensor-Zustandes und Speicherung sensorrelevanter Daten hauptsächlich durch den Funktionsblock 18 übernommen werden. Die Arbeitsteilung zwischen den Funktionsblöcken 17 und 18 kann variabel gestaltet werden und auf die Erfordernisse einzelner Sensortypen angepasst werden. Über ebenfalls in der Elektronikeinheit 3 untergebrachte Schnittstellen 19, 20 kann das Messgerät sowohl digital über die digitale Schnittstelle 20, beispielhaft als RS-485 - Schnittstelle ausgeprägt, direkt kommunizieren als auch analog über eine 4-20 mA Schnittstelle 19 mit dem Prozessleitsystem 5 direkt verbunden sein. In der Elektronikeinheit 3 ist gleichzeitig die galvanische Trennung zwischen dem Messmedium einerseits und der übergeordneten Einheit und der Energieversorgung andererseits realisiert. Die Stromversorgung der Elektronikeinheit 3 und damit des ganzen Messgerätes kann optional über die 4-20 mA Schnittstelle 19 aber auch mittels einer externen Stromversorgung 7 erfolgen. Die Auswahl der Stromversorgung kann gegebenenfalls automatisch mit Hilfe der Vorrichtung 21 erfolgen.

### Ausführungsbeispiel 1

Das in Figur 1 dargestellte pH- Messgerät, weist einen pH- Sensor in Form einer Einstabmesskette auf, der neben einer gebräuchlichen ersten Referenzelektrode und einem Temperaturfühler noch eine zweite Referenzelektrode sowie einen Solution Ground aufweist. Mit Hilfe dieser zusätzlichen Mittel ist es möglich, neben der eigentlichen pH- und Temperaturmessung die üblichen Parameter zur Selbstüberwachung von pH- Sensoren, die Glasimpedanz als auch die Impedanz des Diaphragmas zu bestimmen.

Des Weiteren kann die Potentialdifferenz zwischen den zwei Referenzelektroden, von denen eine weniger stabil ist und auf den Verlust von Chlorid- lonen im Referenzelektrolyten eher reagiert, permanent bestimmt werden. In der Elektronikeinheit des erfindungsgemässen Messgerätes sind entsprechende elektronische Mittel integriert, mit denen neben dem pH-Wert und der Temperatur auch diese Parameter gemessen werden können. Im Verlauf des Sensorbetriebes werden die gemessenen Parameter permanent mit den jeweiligen im Messgerät werks- oder kundenseitig gespeicherten Grenzwerten, welche für den jeweiligen pH- Sensor-Typ spezifisch sein können, verglichen. Aus diesem Vergleich können der Status des Sensors und gegebenenfalls Warnungen und Fehlermeldungen abgeleitet und direkt in analoger und/oder digitaler Form dem Prozessleitsystem signalisiert werden.

Die für einen pH- Transmitter üblichen Funktionen wie z.B. eine Temperaturkompensation, die Hinterlegung von Pufferdaten zur automatischen Kalibrierung, Speicherung von Kalibrierdaten, z.B. Steilheit, Asymmetrie und lsothermenschnittpunkt, und der Sensorhistorie sind in dem erfindungsgemässen Messgerät möglich und vorgesehen. Darüber hinaus ermöglicht die Untrennbarkeit der Elektronikeinheit vom Sensor die permanente Abspeicherung der bei der Werkskalibrierung anfänglich ermittelten Kalibrieraber auch anderer relevanter sensorspezifischer Daten, so dass die Veränderung des Sensors im Laufe seines Betriebes oder auch danach verfolgt und analysiert werden kann, ohne dass auf externe Datenspeicher zurückgegriffen werden muss. Besondere Situationen, denen der Sensor ausgesetzt ist, wie z. B. hohe Temperaturen, extreme pH-Werte o. ä., können registriert, gezählt, die Folgen für den Sensor bewertet und die Sensorparameter allenfalls angepasst werden.

Weiter wird der Messvorgang im Sensor kontinuierlich auf die Anforderungen an den Messprozess unter Vorgabe gewisser Konfigurationseinstellungen optimiert. Beispielsweise passen sich Integrationszeiten oder gleitende Mittelwertbildung an die sich ändernden Messbedingungen an.

In dem erfindungsgemässen pH- Messgerät sind nicht nur Funktionen integriert, welche die Unversehrtheit und Funktionstüchtigkeit des Sensorelementes prüfen, sondern ebenfalls die der Elektronikeinheit. So werden beispielsweise Überspannungen, Unterbrüche, Kurzschlüsse u. ä. registriert und Folgeaktionen wie Warn- und Fehlermeldungen ausgelöst.

### Ausführungsbeispiel 2

Das in Figur 2 dargestellte Ausführungsbeispiel zeigt ein erfindungsgemässes Leitfähigkeitsmessgerät, welches einen kontaktierenden 4-Pol-Leitfähigkeitssensor aufweist. Da die Elektronikeinheit untrennbar mit dem Sensor verbunden ist, können werksseitig die Form der eingespeisten Wechselsignale, die Anregungsfrequenzen und Verstärkungen als auch Algorithmen für die Signalauswertung programmiert werden, welche für die jeweiligen Leitfähigkeitswerte für diesen Sensor optimal hinsichtlich Verfälschungen durch Polarisationseffekte sind. Kapazitive Effekte durch Anschlussleitungen entfallen weitestgehend, da die Elektroden des Sensors unmittelbar an die Elektronikeinheit, also an den Transmitter angeschlossen sind. Der Leitfähigkeitssensor verfügt über einen Temperaturfühler (nicht dargestellt) der ebenfalls an die Elektronikeinheit angeschlossen ist.

Die für einen Leitfähigkeits-Transmitter üblichen Funktionen wie z.B. eine Temperaturkompensation, die Hinterlegung von Pufferdaten zur automatischen Kalibrierung, Speicherung von Kalibrierdaten, z.B. der Zellkonstante und der Sensorhistorie sind in dem erfindungsgemässen Messgerät möglich und vorgesehen. Darüber hinaus ermöglicht die Untrennbarkeit der Elektronikeinheit vom Sensor die permanente Abspeicherung der bei der Werkskalibrierung anfänglich ermittelten Kalibrier- aber auch anderer relevanter sensorspezifischer Daten, so dass die Veränderung des Sensors im Laufe seines Betriebes aber auch danach verfolgt und analysiert werden kann, ohne dass auf externe Datenspeicher zurückgegriffen werden muss. Besondere Situationen, denen der Sensor ausgesetzt ist, wie z. B. hohe Temperaturen, hohe Leitfähigkeiten können registriert, gezählt, die Folgen für den Sensor bewertet und die Sensorparameter allenfalls angepasst werden.

Weiter wird der Messvorgang im erfindungsgemässen Messgerät kontinuierlich auf die Anforderungen an den Messprozess unter Vorgabe gewisser Konfigurationseinstellungen optimiert. Beispielsweise passen sich Integrationszeiten oder gleitende Mittelwertbildung an die sich ändernden Messbedingungen an.

In dem erfindungsgemässen Leitfähigkeitsmessgerät sind nicht nur Funktionen integriert, welche die Unversehrtheit und Funktionstüchtigkeit des Sensorelementes prüfen, sondern ebenfalls die der Elektronikeinheit. So werden beispielsweise Überspannungen, Unterbrüche, Kurzschlüsse u. ä. registriert und Folgeaktionen wie Warn- und Fehlermeldungen ausgelöst.

### Bezugszeichenliste

- 1: pH- Messgerät
- 2: pH- Sensor
- 3: Elektronikeinheit
- 4: Kontaktstecker
- 5: Prozessleitsystem
- 6: Verbindungskabel
- 7: externe Stromversorgung
- 8: Diaphragma
- 9: Temperaturfühler, z.B. NTC, Pt100, Pt1000
- 10: pH- Ableitung
- 11: erste Referenzelektrode
- 12: zweite Referenzelektrode
- 13: Solution Ground
- 14: Leitfähigkeitsmessgerät
- 15: 4- Pol Leitfähigkeitssensor
- 16: Strom- und Spannungselektroden
- 17: Messumformer
- 18: Interface
- 19: 4-20 mA Schnittstelle
- 20: digitale Schnittstelle, z.B. RS-485 Schnittstelle
- 21: Stromversorgungsautomatik
- 22: beliebiger Prozess- Sensor

## Patentansprüche

1. Vorrichtung zur Bestimmung und Überwachung mindestens einer chemischen oder physikalischen Messgröße, umfassend:
einen Sensor (22) zur Erfassung der chemischen oder physikalischen Messgröße und Generierung von analogen Messdaten und
eine Elektronikeinheit (3), umfassend:
ein Mittel zur Überwachung des Zustandes des Sensors (22),
ein Mittel zur Digitalisierung der analogen Messdaten aus dem Sensor (22),
ein Mittel zur Weiterleitung der analogen und digitalisierten Daten,
mindestens eine analoge Schnittstelle (19) und
mindestens eine digitale Schnittstelle (20) zur Verbindung der Vorrichtung mit einem Prozessleitsystem (5) sowie
eine galvanische Trennung zwischen Messmedium und den Schnittstellen (19, 20).
**dadurch gekennzeichnet, dass**
die Elektronikeinheit (3) mit dem Sensor (22) untrennbar verbunden ist und
ein Mittel zur selbstständigen Überprüfung sowohl der Funktion und des Zustands der Elektronikeinheit (3) als auch der Funktion und des Zustands des Sensors (22) umfasst.

2. Vorrichtung nach Anspruch 1, wobei die Elektronikeinheit (3) ferner eine Stromversorgungsautomatik (21) umfasst, die derart die Stromversorgung der Vorrichtung (1) steuert, dass bei analoger Kommunikation mit dem Prozessleitsystem die Stromversorgung über die mindestens eine analoge Schnittstelle (19) bzw. bei digitaler Kommunikation mit dem Prozessleitsystem (5) die Stromversorgung der Vorrichtung vermittels einem Mittel zur Verbindung mit einer externen Stromversorgung (7) verfolgt.

3. Vorrichtung nach einem der vorhergehenden Ansprüche, wobei die Elektronikeinheit (3) ferner ein Mittel zur Datenspeicherung von sensorrelevanten Daten umfasst.

4. Vorrichtung nach Anspruch 3, wobei im Mittel zur Datenspeicherung Kalibrierdaten und sensorspezifische Daten abgespeichert sind.

5. Vorrichtung nach Anspruch 3 oder 4, wobei die Elektronikeinheit (3) einen ersten Funktionsblock (17) und einen zweiten Funktionsblock (18) umfasst, wobei der erste Funktionsblock (17) das Mittel zur Digitalisierung der Messdaten, ein Mittel zur Verstärkung der Messdaten sowie ein Mittel zur Aufnahme der Messdaten umfasst, und der zweite Funktionsblock (18) das Mittel zur selbstständigen Überprüfung, ein Mittel zur Verarbeitung des Sensorzustands, das Mittel zur Weiterleitung der Messdaten und das Mittel zur Datenspeicherung der sensorrelevanten Daten umfasst.

6. Vorrichtung nach einem der vorhergehenden Ansprüche, wobei die analoge Schnittstelle (19) eine 4-20 mA Schnittstelle und/oder die digitale Schnittstelle (20) eine RS-485 Schnittstelle ist.

7. Vorrichtung nach einem der vorhergehenden Ansprüche, wobei der Sensor (22) als Einstabsmesskette ausgebildet ist.

8. Vorrichtung nach einem der vorhergehenden Ansprüche, wobei der Sensor (22) ein pH-Sensor (2) ist, umfassend:
eine Ableitung (10) für das Potential einer Elektrode,
ein Referenzelektrolytraum,
ein Diaphragma (8) im Referenzelektrolytraum,
einen Temperaturfühler (9),
eine erste Referenzelektrode (11),
eine zweite Referenzelektrode (12), und
ein Solution Ground (13).

9. Vorrichtung nach Anspruch 8, eine der beiden Referenzelektroden (11, 12) gegenüber dem Verlust von Chlorid-Ionen im Referenzelektrolyten reaktiver ausgebildet ist.

10. Vorrichtung nach einem der Ansprüche 1 bis 6, wobei der Sensor (22) ein Leitfähigkeitssensor (15) ist, wobei der Leitfähigkeitssensor (15) als 4-pol Sensor ausgebildet ist, umfassend zwei Strom- und Spannungselektroden (16).

11. Verfahren zur Überwachung und Anpassung einer Vorrichtung nach Anspruch 1. umfassend die Schritte:
Abspeichern von Sensordaten im Messgerät,
Auslesen der abgespeicherten Sensordaten,
Vergleichen der zuletzt abgespeicherten Sensordaten mit zuvor abgespeicherten Sensordaten, und
Anpassen von Sensorparametern bei Überschreitung einer vordefinierten Abweichung zwischen den abgespeicherten Sensordaten.

## Claims

1. A device for determining and monitoring at least one chemical or physical measurement parameter, comprising:
a sensor (22) for detecting the chemical or physical measurement parameter and generating analogue measurement data, and
an electronic unit (3), comprising:
a means for monitoring the state of the sensor (22),
a means for digitizing the analogue measurement data from the sensor (22),
a means for forwarding the analogue and digitized data,
at least one analogue interface (19), and
at least one digital interface (20) for connecting the device to a process control system (5) and
a galvanic separation between the measurement medium and the interfaces (19, 20),
**characterized in that**
the electronic unit (3) is inseparably connected to the sensor (22) and
comprises a means for autonomously checking both the function and state of the electronic unit (3) and the function and state of the sensor (22).

2. The device according to claim 1, wherein the electronic unit (3) further comprises a power supply system (21) which controls the power supply to the device (1) in such a way that in the event of analogue communication with the process control system the power supply takes place via the at least one analogue interface (19) and in the event of digital communication with the process control system (5) the power supply to the device takes place via a means for connecting to an external power supply (7).

3. The device according to any of the preceding claims, wherein the electronic unit (3) further comprises a means for data storage of sensor-related data.

4. The device according to claim 3, wherein calibration data and sensor-specific data are stored in the means for data storage.

5. The device according to claim 3 or 4, wherein the electronic unit (3) comprises a first functional block (17) and a second functional block (18), wherein the first functional block (17) comprises the means for digitizing the measurement data, a means for amplifying the measurement data and a means for recording the measurement data, and the second functional block (18) comprises the means for autonomous checking, a means for processing the sensor state, the means for forwarding the measurement data and the means for data storage of the sensor-related data.

6. The device according to any of the preceding claims, wherein the analogue interface (19) is a 4-20 mA interface and/or the digital interface (20) is an RS-485 interface.

7. The device according to any of the preceding claims, wherein the sensor (22) is configured as a combination electrode.

8. The device according to any of the preceding claims, wherein the sensor (22) is a pH sensor (2), comprising:
a derivation (10) for the potential of an electrode,
a reference electrolyte chamber,
a diaphragm (8) in the reference electrolyte chamber,
a temperature probe (9),
a first reference electrode (11),
a second reference electrode (12), and
a solution ground (13).

9. The device according to claim 8, wherein one of the two reference electrodes (11, 12) is designed to be more reactive with regard to the loss of chloride ions in the reference electrolyte.

10. The device according to any of claims 1 to 6, wherein the sensor (22) is a conductivity sensor (15), wherein the conductivity sensor (15) is configured as a 4-pole sensor, comprising two current and voltage electrodes (16).

11. A method for monitoring and adapting a device according to claim 1, comprising the steps:
storing sensor data in the measuring device,
reading the stored sensor data,
comparing the most recently stored sensor data with previously stored sensor data, and
adapting sensor parameters if a predefined deviation between the stored sensor data is exceeded.

## Revendications

1. Dispositif destiné à la détermination et à la surveillance d'une grandeur de mesure chimique ou physique, comprenant :
un capteur (22) destiné à la détection de la grandeur de mesure chimique ou physique et à la génération de données de mesure analogiques et
une unité électronique (3), comprenant :
un moyen de surveillance de l'état du capteur (22),
un moyen de numérisation des données de mesure analogiques provenant du capteur (22),
un moyen de transmission des données analogiques et numérisées,
au moins une interface analogique (19) et
au moins une interface numérique (20) pour le raccordement du dispositif à un système de contrôle de processus (5) ainsi
qu'une séparation galvanique entre le milieu de mesure et les interfaces (19, 20),
**caractérisé en ce que**
l'unité électronique (3) est raccordée de façon inséparable au capteur (22) et
comprend un moyen pour la surveillance automatique aussi bien du fonctionnement et de l'état de l'unité électronique (3) que du fonctionnement et de l'état du capteur (22).

2. Dispositif selon la revendication 1, l'unité électronique (3) comprenant également un système automatique d'alimentation électrique (21) qui commande l'alimentation électrique du dispositif (1) de telle sorte que, en cas de communication analogique avec le système de contrôle de processus, l'alimentation électrique s'effectue par le biais de l'interface analogique (19) au moins au nombre de un ou respectivement, en cas de communication numérique avec le système de contrôle de processus (5), l'alimentation électrique du dispositif s'effectue au moyen d'un moyen de raccordement à une alimentation électrique (7) externe.

3. Dispositif selon une des revendications précédentes, l'unité électronique (3) comprenant également un moyen de stockage de données de données présentant un intérêt en matière de capteur.

4. Dispositif selon la revendication 3, des données d'étalonnage et des données spécifiques au capteur étant mises en mémoire dans le moyen de stockage de données.

5. Dispositif selon la revendication 3 ou 4, l'unité électronique (3) comprenant un premier bloc fonctionnel (17) et un deuxième bloc fonctionnel (18), le premier bloc fonctionnel (17) comprenant le moyen de numérisation des données de mesure, un moyen de renforcement des données de mesure ainsi qu'un moyen d'enregistrement des données de mesure, et le deuxième bloc fonctionnel (18) comprenant le moyen de surveillance automatique, un moyen de traitement de l'état de capteur, le moyen de transmission des données de mesure et le moyen de stockage de données des données présentant un intérêt en matière de capteur.

6. Dispositif selon une des revendications précédentes, l'interface analogique (19) étant une interface 4-20 mA et/ou l'interface numérique (20) étant une interface RS-485.

7. Dispositif selon une des revendications précédentes, le capteur (22) étant constitué en tant que chaîne de mesure à une tige.

8. Dispositif selon une des revendications précédentes, le capteur (22) étant un capteur de pH (2), comprenant :
une dérivation (10) pour le potentiel d'une électrode,
un compartiment à électrolyte de référence,
un diaphragme (8) dans le compartiment à électrolyte de référence,
une sonde de température (9),
une première électrode de référence (11),
une deuxième électrode de référence (12),
une Solution Ground (13).

9. Dispositif selon la revendication 8, une des deux électrodes de référence (11, 12) étant constituée de façon plus réactive vis-à-vis de la perte d'ions chlorure dans l'électrolyte de référence.

10. Dispositif selon une des revendications 1 à 6, le capteur (22) étant un capteur de conductivité (15), le capteur de conductivité (15) étant constitué en tant que capteur à 4 pôles, comprenant deux électrodes d'intensité et de tension (16).

11. Procédé de surveillance et d'adaptation d'un dispositif selon la revendication 1, comprenant les étapes suivantes :
mise en mémoire de données de capteur dans l'appareil de mesure,
lecture des données de capteur mises en mémoire,
comparaison des données de capteur mises en mémoire en dernier avec des données de capteur mises en mémoire antérieurement, et
adaptation de paramètres de capteur en cas de passage au-dessus d'un écart prédéfini entre les données de capteur mises en mémoire.
